# EUROPEAN PATENT SPECIFICATION

(11) **EP 2 383 691 B1**
(45) Date of publication and mention of the grant of the patent: **31.07.2013**
(21) Application number: 10166727.7
(22) Date of filing: 21.06.2010
(51) Int. Cl.: H04M 1/725, H04M 1/60

(54) **System and method for distributing messages to an electronic device based on movement of the device**
System und Verfahren zur Verteilung von Nachrichten an eine elektronische Vorrichtung auf Grundlage der Bewegung der Vorrichtung
Système et procédé pour distribuer des messages à un dispositif électronique d'après le mouvement du dispositif

(30) Priority: 29.04.2010 US 770220
(43) Date of publication of application: 02.11.2011
(73) Proprietor: Research In Motion Limited, Waterloo, ON N2L 3W8 (CA)
(72) Inventor: Tziortzis, Alek, Rolling Meadows, IL 60008 (US); Proulx, David Rene, Waterloo Ontario N2L 0A4 (CA); Bells, Matthew, Waterloo Ontario N2L 5Z5 (CA); Scott, Sherryl Lee Lorraine, Waterloo Ontario N2L 3W8 (CA)
(74) Representative: Moore, Barry

(56) References cited:
- WO-A1-2009/104088
- US-A1- 2008 227 467

## Description

### FIELD OF DISCLOSURE

The disclosure described herein relates to a system and method for distributing messages and / or content to an electronic device, such as a mobile electronic communication device.

### BACKGROUND

Currently, advertisements and other messages are transmitted to a mobile communication device for review by the user of the device. The number of advertisements provided can be overwhelming to the user of the device. Further the context of use of a device by a user may render a particular format of an advertisement as being inappropriate.

U.S. patent publication no. 2008/0227467 discloses an advertisement system for mobile devices using location fixes for the devices. PCT publication no. WO 2009/10488 discloses a system that can estimate a motion state of a terminal.

There is a need for a system and method which addresses one or more of these deficiencies.

### SUMMARY

Accordingly, the present teaching provides a method as detailed in claim 1. A server as detailed in claim 13 is provided. Advantageous embodiments are provided in the dependent claims

### BRIEF DESCRIPTION OF THE DRAWINGS

Embodiments of the present disclosure will now be described, by way of example only, with reference to the accompanying drawings, in which:

Fig. 1 is a schematic diagram of a device in communication with a communication network, where the network includes an advertisement server that provides communications to the device in an embodiment;

Fig. 2 is a flowchart of exemplary processes executed by the device of Fig. 1, as it receives communications from the advertisement server

Fig. 3 is a flowchart of exemplary processes executed by the advertisement server of Fig. 1, as it sends communications to the device;

Fig. 4 is a schematic representation of the device of Fig. 1;

Fig. 5 is a block diagram of certain internal components of the device in Fig. 4;

Fig. 6 is a block diagram of two movement detection systems of in the device of Fig. 1;

Fig. 7 is a block diagram of an alternative movement detection system of in the device of Fig. 1; and

Fig. 8 is a block diagram of components of an advertisement server of Fig. 1.

### DETAILED DESCRIPTION OF AN EMBODIMENT

The description which follows and the embodiments described therein are provided by way of illustration of an example or examples of particular embodiments of the principles of the present disclosure. These examples are provided for the purposes of explanation and not limitation of those principles and of the present disclosure. In the description which follows, like parts are marked throughout the specification and the drawings with the same respective reference numerals.

In a first aspect, a method for distributing messages to a portable electronic device is provided. The method comprises: selecting a media, which may be an advertisement, from a set of advertisements based on a state of movement of the device, where the state of movement is at least partly based on movement data of the device; and transmitting the advertisement to the device.

In the method, after transmitting the advertisement to the device, the advertisement may be generated on the device.

In the method, the advertisement may be selected based on a speed of the device determined from the state of movement. The speed of the device may be associated with the speed of a user of the device.

In the method, the state of movement may be determined from comparing the movement data against a threshold to determine a speed of the device.

In the method, if the speed exceeds the threshold then the advertisement may include an audio component. If the speed does not exceed the threshold then the advertisement may provide audio and visual components.

In the method, if context data indicates that the device is associated with a driver of a vehicle then the advertisement may include an audio component.

In the method, the context data may be determined based on a status of a communication connection between the device and the vehicle.

In the method, if the context data indicates that the device is associated with a passenger associated with the driver then the advertisement may differ from a second advertisement in the set of advertisements sent to a second device associated with the driver.

In the method, the context data may be determined based on a status of a communication connection between the device and the second device.

In the method, the advertisement may include a visual component and the second advertisement does not include a visual component.

In the method, the movement data may be provided from one or more of an accelerometer, global positioning system (GPS) data, and communication strength signals, provided from the device.

In the method, data from the accelerometer may be analyzed to determine the speed based on data relating to changes of speed detected by the accelerometer for the device.

In the method, the context data may include data from a calendar module operating on the device.

In the method, the context data may include time data associated with the device.

The method may further comprise: if the state of movement changes to a second state of movement, then selecting a replacement advertisement from the set of advertisements based on the second state of movement; and then transmitting the replacement advertisement to the device.

In the method, the advertisement may be selected based on a route of travel for the device derived from the movement data.

In the method, the advertisement may be selected based an analysis of a history of the route of travel of the device. A prediction may be made for the route based on time, location, and history data.

In the method, one or more of the set of advertisements may be preloaded on to the device.

The method may further comprise providing a facility to initiate a request for additional information relating to the advertisement to be provided to the device.

In a second aspect, a server for distributing messages to a portable electronic device is provided. The server comprises: a movement analysis module to analyze movement data relating to the device to determine a state of movement of the device; an advertisement selection module for selecting an advertisement from a set of advertisements based on the state of movement; and an advertisement transmittal module for transmitting the advertisement to the device. After transmitting the advertisement to the device, the advertisement may be generated on the device.

In the server, the advertisement selection module may select the advertisement based on a speed of the device determined from the state of movement.

In the server, if the speed exceeds the threshold then the advertisement may include an audio component; and if the speed does not exceed the threshold then the advertisement may provide audio and visual components.

In the server, if context data indicates that the device is associated with a driver of a vehicle then the advertisement selection module may select the advertisement having an audio component.

In the server, the context data may be determined based on a status of a communication connection between the device and the vehicle.

In the server, if the context data indicates that the device is associated with a passenger associated with the driver then the advertisement selection module may select the advertisement that differs from a second advertisement in the set of advertisements sent to a second device associated with the driver. In the server, the context data may be determined based on a status of a communication connection between the device and the second device.

In the server, the advertisement selection module may select the advertisement to include a visual component and the second advertisement does not include a visual component.

In the server, the movement data may be provided from one or more of an accelerometer, global positioning system (GPS) data, and communication strength signals, provided from the device.

In the server, data from the accelerometer may be analyzed to determine the speed based on data relating to changes of speed detected by the accelerometer for the device.

In the server, the context data may include data from a calendar module operating on the device. In the server, the context data may include time data associated with the device.

In the server, if the state of movement changes to a second state of movement, the advertisement selection module may select a replacement advertisement from the set of advertisements based on the second state of movement. Then, the replacement advertisement may be transmitted to the device.

In the server, the advertisement may be selected based on a route of travel for the device derived from the movement data.

In other aspects, various combinations of sets and subsets of the above aspects are provided.

Generally, an embodiment provides a device, system and method to distribute and manage communications that are provided to an electronic device, such as, but not limited to, a (portable) wireless communication device, a laptop computer or a personal computer. A communication can be any media, such an advertisement. Generally an advertisement may contain any one or more of a text message, indicator, graphic, sound or other audio/visual content. An advertisement may be provided to the device in various forms and media, including as a message (for example, an email, a text message, or a voice mail message), as an embedded link in a website page that is accessed to the device, as a streamed content to the device. Also, an advertisement may be embedded and / or integrated into an application such that the advertisement is generated on the device without any request or further action required by a user of the device. For example, an advertisement may be generated as a visual output within a web page or as an output while an application is operating (e.g. as a banner during a telephone call). For the sake of convenience, and not limitation, the terms "advertisement" and "message" as used herein include any data or communication that is provided to the device. A purpose of distributing the advertisement may be to promote a particular ware, service or event. An advertisement may be provided through one or more servers logically connected to the network. However, an advertisement may also be provided from other devices in the network. A message may include any communication between devices that includes an advertisement. An embodiment permit a user to "over-ride" an operating mode of the device that generates the advertisement. Advertisements may be stopped and viewed at a later time.

One feature of an embodiment provides a particular format of an advertisement to a device depending on the current environment of the device. For example, if the device is moving (e.g. as it is being carried by a user who is walking or is carried by a user in a car, train, boat or plane), the form of an advertisement provided to the device may be changed. For example, if it is determined that the device is being carried by a driver of a car, an advertisement may not be provided to the device. Alternatively, a different format for the advertisement (e.g. audio only) may be provided or presented to the device. Alternatively still, if it is determined that the user of the device is a passenger in the same car, then another format of the advertisement may be provided to the device. This determination may be made by a profile setting for the device (e.g. device is: "in car - passenger", "in car - driver", "in train", etc.). Alternatively a determination may be select by an application on the device, which may present a message on the display indicating the selection and allowing changes. For example, a message may be generating stating: "An assumption is being made that you are driving so future advertisements will be sent via voice output only. Please update if necessary." As such, an embodiment may provide a collaborative set of formats of advertisements to a group of users of devices, when it is determined that the group is linked by some common association or connection (e.g. the devices are all in the same car, they all belong to the same family, etc.). The specific forms and/or formats of advertisements provided to each group member may depend on parameters and filters associated with each device.

In one embodiment, advertisements are provided to a device through a network. The advertisements are processed by an application or module provided in software, firmware or hardware on an advertisement server in the network. Alternatively, the advertisements may be stored and processed in the device allowing advertisements to be accessed later when possibly a network connection is not available. Additionally, aspects of the application and module can be split between the device and one or more servers. An embodiment can track an environment and operating conditions of the device based on an analysis of data stored by and signals received by the device. The environment and operating conditions may include data relating to the time of day, the location/movement of the device, the communication links currently established with the device, the detected light around the device, etc. In addition, an embodiment may obtain and use network presence information regarding other devices in the network.

First, a description is provided of a network and an exemplary communication device that has access to servers in the network, including an advertisement server, according to an embodiment. Thereafter, specific features of an embodiment are discussed.

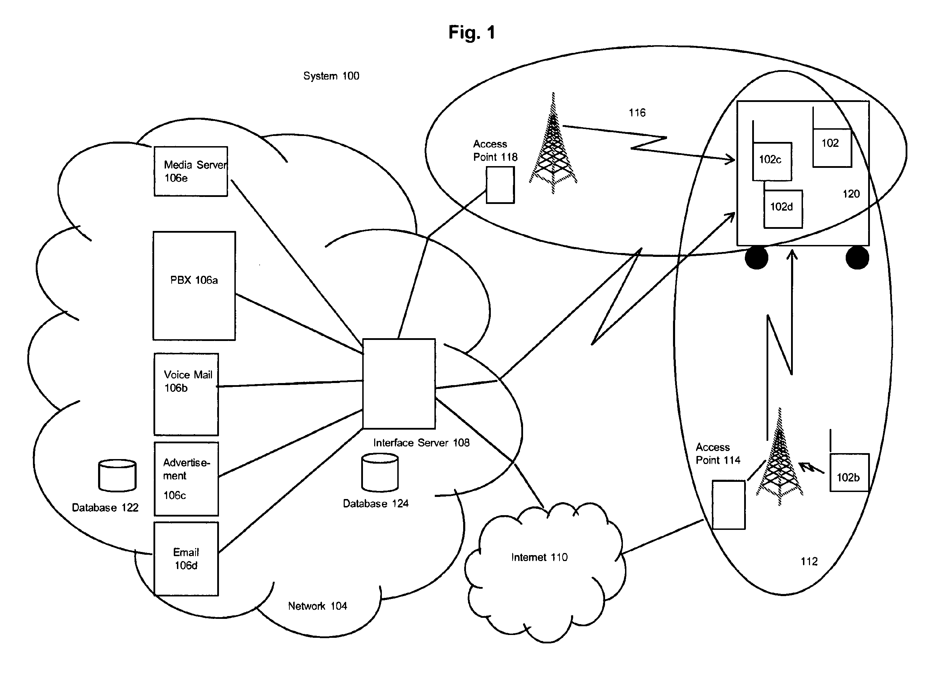

Referring to Fig. 1, system 100 shows device 102 in communication with network 104. Device 102 is a communication device having one or both data and voice communication capabilities; it may be a multiple-mode device capable of voice, data and other types of communications. Device 102 may be a wireless handheld device, cell phone, smart phone, personal digital assistant (PDA), and/or computer (either desktop or portable) having a (wireless) network card, network adapter and/or network interface controller (NIC) installed therein.

Device 102 may include a movement detection module (described later), which may incorporate an accelerometer. In addition to detecting motion, an accelerometer may be used to determine speed and acceleration of device 102. Device 102 may also have a global positioning system (GPS) module (described later) that receives signals from one or more satellites, thereby allowing a location of the device to be calculated using triangulation techniques. Notably, location and speed data for device 102 may be determined based on the received location signals, such as those from a GPS module, using methods and applications known in the art.

Device 102 may have radio frequency identification (RFID) capabilities, and thus device 102 may include an RFID transponder and / or an RFID reader. RFID uses radio waves to automatically identify objects, which may be done in several ways. An exemplary identification technique stores identification data, which may include a serial number, that identifies device 102 on a storage device, such as a microchip, that is in communication with the RFID transponder inside device 102. An RFID reader enables an RFID transponder that is within the RFID reader's range to transmit the stored identification data to the RFID reader. The range of an RFID reader may depend on its power output and the radio frequency used. The RFID reader may receive and convert the radio waves transmitted by the RFID transponder into digital information which may then be processed by a processor on device 102 or a related server.

Device 102 may further include a short-range communication sub-system that enables communication between device 102 and other proximate systems or devices, which need not necessarily be similar devices. For example, the short-range communication sub-system may include an infrared device and associated circuits and components, or a Bluetooth (trade-mark) communication module to provide for communication with similarly enabled systems. Further details on components of device 102 are provided hereinbelow.

Returning to Fig. 1, device 102 is shown in system 100 as communicating with several networks, each of which may be implemented in any known network architecture topology. Exemplary networks are described below.

Network 104 provides a suite of applications, services and data to its connected devices (e.g., device 102) through its associated servers 106a, 106b, 106c (collectively "application servers 106"). Interface server 108 is provided as one common collection and communication point for application servers 106 to components outside of network 104. Devices (such as device 102) connect to network 104 through wireless connections or through an external connection through Internet 110.

Wireless network 112 provides another communication link for device 102 to network 104. Network 112 also provides communications between device 102 and device 102b. Wireless network 112 may be a data-centric network, a voice-centric network, or a dual-mode network. In one embodiment, wireless network 112 is implemented as a Wi-Fi network generally following standards set by the IEEE LAN/MAN Standards Committee, known as IEEE 802, through its working group "11". The 802.11 standard defines media access control (MAC) and physical (PHY) layers in the Open Systems Interconnection (OSI) protocol model for WLAN. Wireless network 112 includes an antenna and supporting radio transmission equipment known to those skilled in the art. Access point (AP) 114 is shown in network 104 and in an embodiment AP 114 is an IEEE 802.11 radio receiver/transmitter (or transceiver) and functions as a bridge between network 112 and network 104.

Cellular network 116 provides device 102 with another communication network allowing it to communicate with network 104. The coverage area of network 116 may overlap with the coverage areas of network 112. Cellular network 116 provides voice and data services to devices 102. Data-centric technologies for cellular network 116 include the Mobitex (trademark) Radio Network ("Mobitex") and the DataTAC (trademark) Radio Network ("DataTAC"). Voice-centric technologies for cellular network 116 include Personal Communication Systems (PCS) networks like Global System for Mobile Communications (GSM) and Time Division Multiple Access (TDMA) systems. Certain networks provide multiple systems. For example, dual-mode wireless networks include Code Division Multiple Access (CDMA) networks, General Packet Radio Service (GPRS) networks, and so-called third-generation (3G) networks, such as Enhanced Data rates for Global Evolution (EDGE) and Universal Mobile Telecommunications Systems (UMTS). Other network communication technologies that may be employed include, for example, Ultra Mobile Broadband (UMB), Evolution-Data Optimized (EV-DO), High Speed Packet Access (HSPA), Evolved High Speed Packet Access (HSPA+), etc. Access point 118 may provide an interface communication point between network 116 and network 104.

As device 102 is mobile, it may be carried by its associated user. Device 102 may be carried by its user in a vehicle, such as vehicle 120. Other passengers in vehicle 120 may also have devices 102c, and 102d. As such vehicle 120 (or a train, plane, boat, bicycle) may have a collection of devices therein. It will be appreciated that a user may have multiple devices 102 that each device may have different capabilities in terms of how they process and generate advertisements. An embodiment may generate a format of an advertisement based on both the user's context and the capabilities of the device. The advertisement may be viewed immediately or saved and viewed at a later time. On the determination that device 102 is in vehicle 120, this environment provides one context for advertisements for device 102 depending on whether the device is associated with a driver or a passenger (and which passenger) of vehicle 120. Other passengers in vehicle 120 may also have devices 102 (not shown) etc. Contexts of "friends" may be made among occupants (driver and sets of passengers) in a vehicle. As such vehicle 120 (which may be a car, train, plane, boat, etc.) may have a collection of devices 102 therein.

Turning to network 104, further detail is provided on exemplary application servers 106 therein. Each server may communicate directly with elements communicating within network 104 (such as device 102 and other application servers 106).

Private Branch Exchange (PBX) server 106a provides a messaging client allowing device 102 to establish local voice and data transmissions within network 104 and with exterior devices and networks. PBX server 106a provides a connection with a PSTN (not shown) for routing incoming and outgoing voice calls for network 104 and its associated enterprise. On one side, PBX server 106a is connected to an external telephone system, such as the PSTN, via direct inward dialling (DID) trunks. In an embodiment, PBX server 106a may use ISDN signalling protocols for establishing and breaking circuit-switched connections through the PSTN and related signalling and communications.

Voice mail server 106b provides storage, retrieval and processing of voice mail data files which may be processed by PBX server 106a or a VoIP (Voice over Internet) system (not shown) associated with network 104. Voice mail server 106b may also notify the user when a voice mail message is left in his mailbox.

Advertisement server 106c provides storage and forwarding of advertisements to devices, such as device 102, and / or servers in network 104. The advertisements, in one example, are received from one or more advertising networks (not shown) in communication with the advertisement server 106c. Advertisement server 106c provides a platform that gathers environment data from devices 102, such as data on the current motion of devices 102, and selectively identifies and distributes forms of advertisement to devices 102 and / or servers in network 104. Database 122 may be associated with server 106c.

Email server 106d provides storage, retrieval and processing of emails, SMS, MMS and other data files which may be processed by network 104. Other application servers 106 (not shown) may be provided (e.g. video streaming servers, etc.).

Media server 106e provides a resource of video, audio and audio/video materials for distribution to devices connected to network 104.

As a common point of interface between elements in network 104 and external elements, such as device 102, interface server 108 is provided that communicates within network 104 with each application server 106 and provides a "gateway" interface connection to external entities, such as device 102, network 116 and network 112. In one embodiment, all communications between device 102 and application servers 106 are processed through interface server 108. Each application server 106 may have an independent connection to the external entities as well. Database 124 is associated with interface server 108 and may contain configuration data for devices 102 and application servers 106, allowing communications to be conducted through application server 106. It will be appreciated that in some configurations, interface server 108 is provided as a logical entity that may contain several modules responsible for various aspects of the interface with the devices 102, such as email processing, web browsing processing, advertising, attachment serving, etc.

With components of an exemplary network identified, further detail is provided on notable features of embodiments.

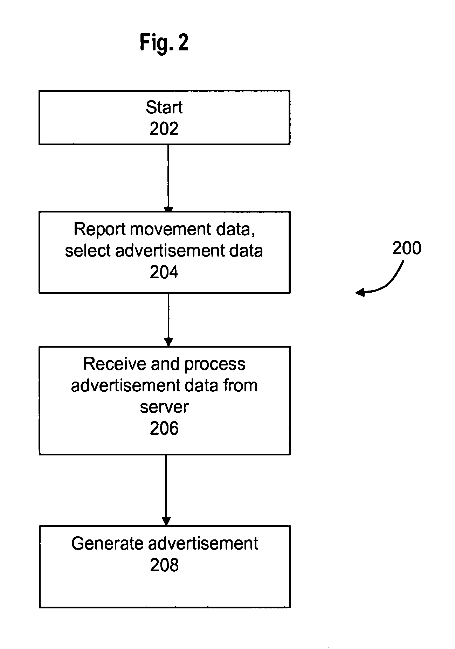

One embodiment provides a "push"-based advertisement distribution system. Referring to Fig. 2, flow chart 200 illustrates an exemplary progression of actions that device 102 executes as it detects its movement, transmits movement data to the network 104, and subsequently receives and displays an advertisement responsive to the movement data. The process begins at process 202. Therein, device 102 is operating in a "normal" fashion and is in communication with network 104. Next, in process 204, device 102 detects, analyzes and reports movement data to advertisement server 106c, via interface server 108. The reporting of data may be initiated from a request from server 106c or may be initiated by device 102 upon a (self) detection of its movement. As a movement may occur at any time, this process may operate as a background process in device 102. Movement data may include data relating to location, speed, direction of travel, route of travel provided on a map or trip plan or navigation system, etc., which device 102 may determine or deduce from its sensors and modules (such as a movement detection module, described later). Movement data may also be in the form of unprocessed data obtained from at least one of the aforementioned sources such that the data is subsequently processed by advertisement server 106c to determine certain information about the movement of device 102.

Once the movement analysis is complete, server 106c then selects an appropriate format of an advertisement and sends it to device 102. The determined current state of movement may also cause certain advertisements to be blocked from being provided to device 102. A basic algorithm of an embodiment may be to select an advertisement from a set of advertisements based on a state of movement of the device, where the state of movement is at least partly based on movement data of the device; and then transmit the advertisement to the device.

At process 206, device 102 receives advertisement data from advertisement server 106c via interface server 108. Thereafter, applications operating on device 102 then generate the format of the advertisement on device 102. Advertisement data may be provided as one of, or a combination of, the following data formats: video (e.g..mpg, .avi, .flv, .rm, .wmv, etc.), image (e.g..jpg, .tif, .gif, etc.), audio (e.g..mp3, .ra, .wav, .wma, etc.), hmtl, flash, etc.. Device 102 generates the received advertisement data according to the particular format of the data (e.g. video, audio, both). Depending on the advertisement data received, device 102 may display an advertisement image on its display either with or without audio, display an advertisement video with or without audio, or play only an audio advertisement through its speakers. Device 102 may provide tracking data to advertisement server 106c when the advertisement is being generated or has been generated on device 102 for advertisement tracking purposes. This tracking data may be sent to another server.

It will be appreciated that in other embodiments, one or more of the processes of Fig. 2 may be performed by applications that are remote to device 102.

In an embodiment, a state of movement of device 102 may be determined in a number of ways, including monitoring signals from the movement detection module of device 102, signals from the global positioning system (GPS) module of device 102, changes in strength of cellular network signals received by device 102, changes in satellite feeds received by device 102, etc. In another embodiment, an active (hardware/software) switch may be provided in device 102 through which a user of device 102 may change a setting to a different state of movement to indicate whether device 102 is moving. In yet another embodiment, device 102 may be connected to vehicle 120 via wire or wireless connection, such as Bluetooth (trade-mark), and device 102 may obtain movement information from the vehicle.

In one embodiment, device 102 may be able to provide different contexts for its detected state(s) of movement. For example, device 102 may be located in a vehicle that is travelling. Alternatively, device 102 may be located in a pocket (or carrying case) of a user that is walking. These two movement contexts may be distinguished from each other. An embodiment may filter different advertisements to be provided to device 102 depending on its movement context. The context may be used to determine a threshold for sending movement data to server 106c. For example, device 102 may transmit movement data to advertisement server 106c when the movement data indicates that device 102 is moving above a predetermined threshold speed (e.g. 20 km/h) and / or device 102 has been moving substantially continuously for a predetermined duration of time (e.g. 2 minutes). One trigger for exchanging data with server 106c may be as device 102 obtains location data from server 106c (or other sources). Such location data may be related to a request for data relating to a map, a route, or traffic updates. The movement data may be interpreted as a movement of the device that is in relation with movement of its user. The device may respond to its user's movement or how user is being moved (i.e. in a car, train, etc.). Additional data, such as time and availability data may be used to determine a context.

In an embodiment, device 102 may be provided with a set of alternative advertisements and may select which one or more advertisements from the set to be generated on device 102. The selection may be based on an analysis of various factors and detected conditions, such as content of an advertisement, the current location of device 102, the detected speed of device 102, the direction of travel of device 102, and any preset preferences of the user of device 102.

Also, an advertisement provided to device 102 and the type of output generated may depend on a given context. For example, if there is a connection between device 102 and vehicle 120, then device 102 may output the audio component of an advertisement through speakers of vehicle 120 or other devices associated with vehicle 120. Also, a given advertisement may be provided to device 102 promoting a given ware, service or event when device 102 is within a given proximity to an associated store, building, theatre, etc. In another embodiment, when device 102 is located in vehicle 120 a determination may be made as to whether device 102 is associated with a driver of vehicle 120 or a passenger in the vehicle. The determination may be made by analyzing whether a Bluetooth (trade-mark) connection has been made between electronics in vehicle 120 and device 102. Alternatively, a software setting may be provided and set to indicate whether device 102 is associate with the driver or a passenger. An embodiment may distinguish between deemed passengers in a vehicle and a driver of the vehicle. In some advertisement campaigns, passengers in a vehicle may be a preferred target audience than the driver, as passengers may have more time and less distractions to receive and review advertisements. Accordingly, when an advertisement is provided to device 102, if device 102 is associated with the driver one format of an advertisement may be provided (e.g. audio only) and if device 102 is associated with a passenger, then another format of the advertisement may be provided (e.g. video with a map and audio). As such, there is a coordination of forms of advertisements provided to the devices 102 in vehicle 120. This provides a method of determining a set of advertisements for a group depending on a context for the group. It will be appreciated that once a first member of a group is identified, then investigations may be made to determine possible other members in the group. Once the group limits have been defined, then rankings of members within the group may be determined and then specific message formats of a given advertisement may be provided to each member. An embodiment may allow tagging (or marking) of an audio advertisement so that the audio advertisement is played at that time and additional formats of the advertisement (which may include video segments) may be viewed later. The marking may be done through a graphical user interface (GUI) or through activation of a button on the device.

As such an embodiment can coordinate what is being generated on an external system (such as a vehicle that the user of device 102 is currently inside) with displays that the passengers may have.

If a detected state of movement changes from its present state while an advertisement is generated on device 102, a further update message may be sent from device 102 to server 106c and subsequently, server 106c may send a command to stop sending or generating the advertisement or replace the advertisement with another one. Alternatively, the original advertisement provided to device 102 may have a conditional trigger condition flag that is used to determine whether the advertisement is generated on device 102. Device 102 may check the status of the flag and/or cause it to be updated depending on the current detected conditions of device 102.

It should also be noted that for a large-scale advertising campaign (e.g. for a national food chain), an advertisement for the campaign may be cached on device 102 and may be triggered based on proximity or other triggers. There may be coordination with server 106c or other servers. As such, large data files would not have to be repeatedly downloaded by device 102.

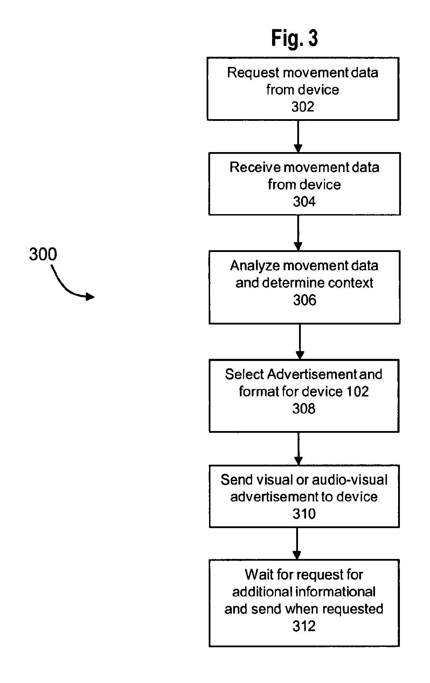

Referring to Fig. 3, flow chart 300 provides an exemplary progression of processes that advertisement server 106c executes when determining when and what advertisement to provide to device 102. At block 302 advertisement server 106c may request movement data from device 102 via interface server 108. In another embodiment, device 102 may independently send movement data to sever 106c. At block 304, advertisement server 106c receives movement data from device 102. The movement data transmitted by device 102 may already be in a format that is readable by advertisement server 106c or the movement data may require processing by interface server 108 and / or advertisement server 106c. The movement data may include information as to whether device 102 is connected to vehicle 120 by a wire or wireless connection, such as Bluetooth (trade-mark). In other embodiments, if a vehicle has a voice recognition feature, the driver (or someone) may say a command such as "navigate to there" or "navigate to advertisement" (either of which would provide directions to the an associated destination for the location or advertisement) and the navigations system would determine a route to the nearest upcoming location with the ability to resume the previous route afterwards.

At block 306, advertisement server 106c analyzes the movement data and makes a determination as a state of movement of device 102. For example, if server 106c determines that device 102 is moving at a speed over a given threshold (e.g. over at least 10 km/h), then server 106c may categorize the state of movement of device 102 as being within a vehicle, such as vehicle 120. Then, additional contexts may also be determined for a given moving vehicle. For example, server 106c may determine whether device 102 belongs to the driver of the vehicle 120. This may be performed, for example, by checking the movement data for information on the existence of a separate communication link, such as a Bluetooth (trade-mark) connection, between device 102 and vehicle 120. Additional time/day and location data may be analyzed. For example, if the time/day is a weekday, one context may be determined (e.g. at work). For example, if the time/day is a weekend, one context may be determined (e.g. at leisure). The day may also indicate a season (e.g. winter, spring, summer, fall). For example snowmobiling may be a deemed activity if the device is moving at a certain speed, the location is deemed to be in a field and the time is the winter. Alternatively, device 102 may have an active (hardware/software) switch that the user may set to indicate that whether he is the driver or passenger.

In block 308, once a state of movement and any context is determined for device 102, server 106c selects an advertisement and a format for the advertisement for device 102. For example, if it is determined that the device 102 is likely associated with the driver, advertisement server 106c may select an audio format of an advertisement for device 102. If the information from device 102 does not indicate a connection between the device and the car, advertisement server 106c may use a derived speed value for device 102 to determine a context for an advertisement. For example, one or more preset speed thresholds may be set (for example, 50 km/h). If the speed of device 102 is determined to be higher than a given threshold, advertisement server 106c may determine that an audio format of an advertisement should be provided. If the speed of device 102 is lower than a given threshold, advertisement server 106c determine that a visual format or an audio-visual format of an advertisement should be provided. In one embodiment, advertisement 106c may send any type of advertisement (i.e. audio, visual, audio-visual) regardless of the speed of device 102. At block 310, the selected format of the advertisement is provided to device 102. At block 312, an optional feature is shown. Therein, server 106c waits for a request for additional information from device 102 and retrieves and send the related data when requested. The request can be provided automatically or a specific request. Such requests may be provided through an activation of a "button" on a GUI of a display of device 102 or through other interfaces to device 102, including a voice command. This allows interactivity to be provided between the advertisement generated at the device and the source of the advertisement. For example, coupon or location/direction information may be provided. Further detail on this interactive feature is provided below.

It will be appreciated that in other embodiments, one or more of the processes provided in the blocks of Fig. 3 may be performed by applications that are remote to server 106c. For example, movement data analysis may be performed on device 102 and device 102 may simply provide a message to server 106c indicating its current state of movement.

Server 106c may have an associated database 122 that stores advertisements and formats. A table, (such as Table A below) may be created that provides a matrix of advertisement formats and conditions on which a particular format / advertisement is to be sent to a particular device 102. A given format for an advertisement may be composed of one or more different audio/visual components. An audio component may be a voice and / or music generated on a speaker of device 102. A visual component may be a static image, a video, a banner, text or any graphical element generated on a display of device 102.

**Table A**

| Advertisement | Formats of Advertisements for Device | | |
|---|---|---|---|
| | In Vehicle (driver) | In Vehicle | Stationary |
| | | (passenger) | |
| Advertisement 1 | Audio only | Audio + Visual | Audio + Visual |
| Advertisement 2 | Audio #1 only | Audio #2 only | Audio #2 only |
| Advertisement 3 | Audio only | Visual #1 | Audio + Visual |
| Advertisement 4 | Email only | Audio only | Visual only |
| Advertisement 5 | SMS message only | SMS + Visual | Audio + Visual |
| Advertisement 6 | none | Audio + Visual | Audio + Visual |
| Advertisement 7 | voice mail | Visual only | Audio + Visual |
| Advertisement 8 | Audio only | Audio + Visual | Audio only |
| Advertisement 9 | Audio only | Audio only | Audio + Visual |
| Advertisement 10 | Audio + Visual #1 | Audio + Visual #2 | Audio + Visual #3 |
| Advertisement 11 | Audio + Visual #1 | Audio + Visual #2 | Visual only |
| Advertisement 12 | Audio + Visual | Audio + Visual | Audio only |

The data in Table A may be stored in database 122 and may be periodically updated. It can be seen that for the matrix, with some advertisements, some states of movements may have no advertisement provided. Alternatively or additionally, a format of an advertisement may be adapter, modified, converted or changed into a different format. For example, an audio-based format of an advertisement may be converted into a text-based advertisement or vice-versa. conversion modules may be presented in either or both of the device 102 or server 106c.

In creating an advertisement format for distribution to device 102, server 106c may provide a command to another server to initiate a communication to device 102 that contains a message containing an advertisement destined for device 102. For example, if a format of an advertisement is as an email or voicemail, server 106c may send a command to server 106d or 106b to send a message containing text or a voice message containing the advertisement and request that server 106d or 106b send an appropriate message containing same to device 102.

It will be appreciated that functions and operations described above for device 102 (and server 106c) in Figs. 2 and 3 may be reconfigured to be performed by its counterpart component (namely a function conducted by device 102 may be conducted on server 106c and vice versa) or on another component in system 100. Appropriate message and command structures may be provided to synchronize functions among the components.

It will be appreciated that determination of movement of device 102 is a notable feature of an embodiment. An embodiment has useful capability of differentiating among types of movement of device 102. For example movement data can be analyzed to determine whether device 102 is travelling in a vehicle 120 or is being moved randomly by its user. Movement data may include speed and direction data. One or both may be used to determine a "type" of movement being experienced by device 102. Server 106c may transmit certain formats of an advertisement to device 102 if device 102 is determined to be travelling in a vehicle. For example, advertisement server 106c may transmit advertisement data to device 102 only if the received movement data indicates that device 102 is moving above a predetermined threshold speed (e.g. 20 km/h) and / or device 102 has been moving substantially continuously for a predetermined duration of time (e.g. 2 minutes). Another embodiment may use basic user-definable settings in an application operating on device 102 (or on a remote application communicating with device 102). Therein a set of (hardware/software) status conditions may be set for device 102 (e.g. device 102 is one of: moving, not moving, at work, not at work, at home, not at home, on vacation, commuting, not commuting, in a vehicle, in a train, in a plane, etc.) with sub-conditions (e.g. user of device 102 is one or more of: a driver, a passenger, associated with device 102b, not to be disturbed, available for any communications, etc.). A status may be a positive or negative condition (e.g. at work or not at work). Other time-based parameters may be considered, e.g. the current time of day, day of week, night time/daytime, etc.

In another embodiment, a given format of an advertisement may be provided to device 102 depending on a determined relevance for device 102, based on the movement data and / or other information associated with device 102. For example, using GPS location information of device 102, advertisement server 106c may identify an advertisement for device 102 promoting a retail outlet that device 102 is near offering a particular ware, service or event provided by the outlet. As such, as a notable location is approaching, a related advertisement may be provided to device 102. The direction of movement of device 102 may also be used (e.g. north, south, east, west, etc.). This direction information may be used to filter advertisements (e.g. if travelling north, then only provide advertisements for proximate entities that are on the east side of the street being travelled on). Advertisement server 106c may also select advertisement content based on the preferences of the user of device 102. The preferences of the user may be derived from a number of sources, including the user's device settings and subscriptions (e.g. Really Simple Syndication, Rich Site Summary, etc.), and the user's event history stored on device 102. For example, the user's preferences may indicate an interest in sports and, based on this information, advertisement server 106c may choose to send advertisements relating to sporting goods, services and events to the user's device 102.

In yet another embodiment, advertisement server 106c may utilize peer-identification information from device 102. For example, for vehicle 120, device 102 may be used by its driver. There may be multiple devices 102c, 102d, etc. also in vehicle 120 and device 102 may identify other nearby devices 102c, 102d, etc. by obtaining identification data from the nearby devices using RFID, Bluetooth (trade-mark) connection, or other communication links. Advertisement server 106c may request peer-identification from device 102. The data provided by device 102 may serve as a sufficient indicator for advertisement server 106c of the movement of peer devices 102c, 102d, etc. This may be useful in a situation where the peer devices have no movement detection capabilities. Using the peer-identification data, advertisement server 106c may selectively transmit advertisement data to peer devices 102c, 102d, etc. In a further embodiment, advertisement server 106c may synchronize the transmission of advertisement data to a group of devices 102, 102c, 102d, etc. travelling in the same vehicle 120, such that the devices in the group generate the same advertisement at the same time to their respective users. In a further embodiment, the synchronization of advertisement may differentiate between device 102 that belongs to the driver and the devices 102c, 102d of the passengers such that different formats of an advertisement are provided to the driver and the passengers. For example, the passenger devices may receive a format that includes a visual component of the advertisement, while the driver's device 102 would not receive the same visual component.

It will be appreciated that in one embodiment, the advertisement server may provide these functions through software, hardware and / or firmware operating on or with its microprocessor. The interface server has a communication connection to the servers in the network; and a second communication link to the electronic device. The interface server may have a device communication module that, through instructions provided to the microprocessor, receives the request from the device for access to one or more services or servers; and generates and sends a response to the request for access to the device. The interface server may also have a server communication module to analyze a status of at least one capability of the electronic device; generate and send a set of access requests to a set of servers of the one or more services or servers that it can access; monitor for responses from the servers; extract access information from said the responses; and process the access information for the response for the device. The interface server produces the set of access requests from an analysis of said status of at the capabilities of the electronic device.

Once an analysis of the status of device 102 is complete, advertisement server 106c builds and sends individual advertisements to the device 102 and any peers.

In another embodiment, a "pull"-based advertisement system may be provided. Therein, one or more aspects of the movement analysis and advertisement analysis may be provided in whole or in part on device 102 and once the analysis is complete, device 102 may send a request for a specific format of an advertisement from server 106c.

Another feature of an embodiment allows additional data, contexts and interactions for advertisements to be provided to a device that is currently generating an advertisement. In particular, when an advertisement is being generated on device 102, an interactive application may be presented or activated (such as on the GUI of the display showing the advertisement) on the device. For example a "coupon" or "direction" or "more info" GUI button may be generated on the display of device 102 near a generated visual advertisement. The button may be any element generated on the display, including an image of a product or thing. When the button is activated, a process is initiated to seek, obtain and generate on device 102 the additional information or details requested. Additionally or alternatively, a web-site link address may be provided. A request for additional information may be provided through other command mechanisms, such as a voice-activated command.

The additional information about the advertisement can provide additional details on the location of the advertiser associated with the advertisements, additional features of the advertised products or any other relevant linked data. The coupon may be a representation of an advertisement. An activation code may be provided that the user is prompted to provide and then once an approval process is completed, information for a discount or a special offer is provided. This information may be stored in the database containing the advertisement and may be provided by server 106c. Some data may be stored on the device itself or may be preloaded onto device 102 from server 106c. The location information may include GPS data about the location of the advertiser. Direction information may be provided based on the current location of device 102 and the location of the advertiser. An electronic coupon may be associated with the advertisement. Commands to purchase or reserve the product or service may be initiated through the interactive feature. Other types of ancillary data may be provided to device 102. The source of the additional information may originate from other servers in the network. The requests initiated through the interactive feature may be sent from device 102 to any other servers in the network.

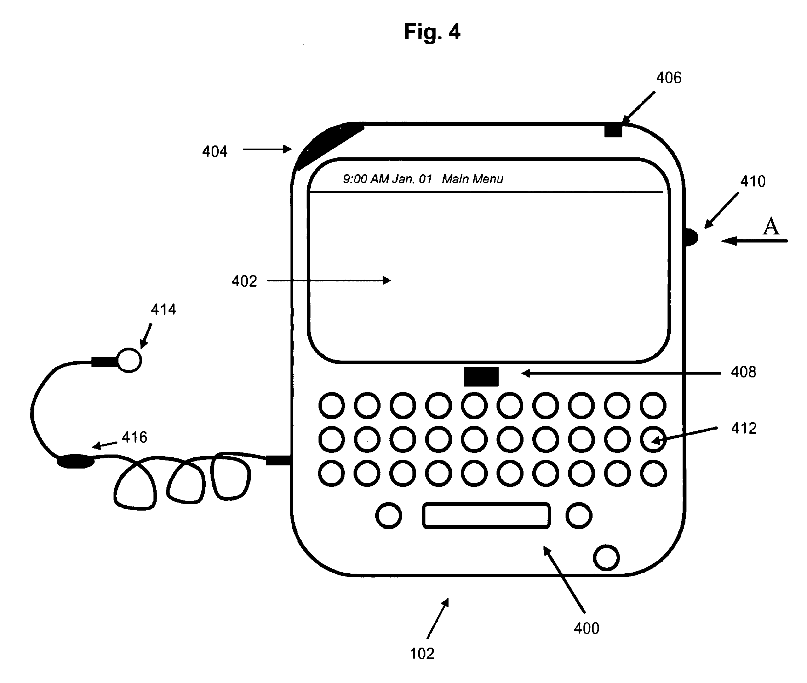

Further detail is now provided on components of device 102 that are related to processes relating to an embodiment. Referring to Fig. 4, electronic device 102 is based on a computing platform having functionality of an enhanced personal digital assistant with cellphone and e-mail features. It is, however, to be understood that electronic device 102 can be based on construction design and functionality of other electronic devices, such as smart telephones, desktop computers, pagers or laptops having telephony equipment. In a present embodiment, electronic device 102 includes a housing 400, an LCD 402, speaker 404, an LED indicator 406, touchpad 408, an ESC ("escape") key 410, keypad 412, a telephone headset comprised of an ear bud 414 and a microphone 416. Touchpad 408 and ESC key 410 can be inwardly depressed as a means to provide additional input to device 102. ESC key 410 may be depressed along the path of arrow "A". A trackball may be provided (not shown).

It will be understood that housing 400 can be made from any suitable material as will occur to those of skill in the art and may be suitably formed to house and hold all components of device 102.

Device 102 is operable to conduct wireless telephone calls, using any known wireless phone system such as a Global System for Mobile Communications (GSM) system, Code Division Multiple Access (CDMA) system, CDMA 2000 system, Cellular Digital Packet Data (CDPD) system and Time Division Multiple Access (TDMA) system. Other wireless phone systems can include Bluetooth (trade-mark) and the many forms of 802.11 wireless broadband, like 802.11a, 802.11b, 802.11g, etc. that support voice. Other embodiments include Voice over IP (VoIP) type streaming data communications that can simulate circuit-switched phone calls. Ear bud 414 can be used to listen to phone calls and other sound messages and microphone 416 can be used to speak into and input sound messages to device 102.

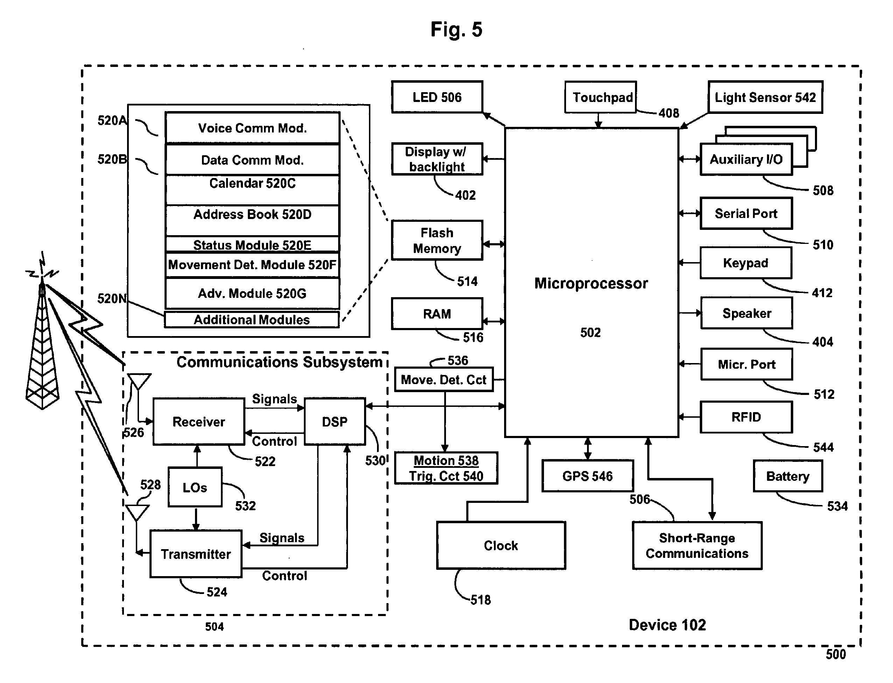

Referring to Fig. 5, functional components of device 102 are provided in schematic 500. The functional components are generally electronic, structural or electromechanical devices. In particular, microprocessor 502 is provided to control and receive almost all data, transmissions, inputs and outputs related to device 102. Microprocessor 502 is shown schematically as coupled to keypad 412 and other internal devices. Microprocessor 502 preferably controls the overall operation of the device 102 and its components. Exemplary microprocessors for microprocessor 502 include microprocessors in the Data 950 (trademark) series, the 6200 series and the PXA900 series, all available at one time from Intel Corporation. Microprocessor 502 is connected to other elements in device 102 through a series of electrical connections to its various input and output pins. Microprocessor 502 has an IRQ input line which allows it to receive signals from various devices. Appropriate interrupt firmware is provided which receives and reacts to the signals detected on the IRQ line.

In addition to the microprocessor 502, other internal devices of the device 102 are shown schematically in Fig. 5. These include: display 402; speaker 404; keypad 412; communication sub-system 504; short-range communication sub-system 506; auxiliary I/O devices 508; serial port 510; microphone port 512 for microphone 416; flash memory 514 (which provides persistent storage of data including local data relating to the status flags used by an embodiment); random access memory (RAM) 516; clock 518 and other device sub-systems (not shown). Device 102 is preferably a two-way radio frequency (RF) communication device having voice and data communication capabilities. In addition, device 102 preferably has the capability to communicate with other computer systems via the Internet. Device 102 may have a SIM card (not shown).

Operating system software executed by the microprocessor 502 is preferably stored in a computer-readable medium, such as flash memory 514, but may be stored in other types of memory devices, such as read-only memory (ROM) or similar storage element. In addition, system software, specific device applications, or parts thereof, may be temporarily loaded into a volatile store, such as RAM 516. Communication signals received by the mobile device may also be stored to RAM 516.

Microprocessor 502, in addition to its operating system functions, enables execution of software applications on device 102. A set of software (or firmware) applications, generally identified as applications 520, that control basic device operations, such as voice communication module 520A and data communication module 520B, may be installed on the device 102 during manufacture or downloaded thereafter. Calendar application 520C and address book application 520D provide useful tracking tools for the user of device 102. Data from the calendar application 520C may be used in an embodiment to determine a context for a state of movement for device 102. Calendar application 502C may also process and also provide information on an expected state of activity of device 102 in the near future. Status module 520E monitors and evaluates the status of various capabilities of device 102 (e.g. its communication connections, battery power, available memory) and updates data stored on device 102 with this information. Module 520E may also generate and send communications to external devices (such as interface server 108) regarding this information on a periodic basis or as statuses change. Module 502E may combine calendar application data with the other sources of information to produce a refined view of the device's status, both now and in the future. Movement detection module 520F receives data from various components of device 102, such as movement detection circuit 536, motion circuit 538 and trigger circuit 540, GPS module 645, RFID module 544, communication module 504, short-range communication sub-system 506, time and calendar data etc. The data collectively can be used to determine whether device 102 is moving, the direction of movement, the speed of the movement, the location of device and what type of terrain the device is on (roads, railways, water, off-road, etc.). Module 520F may provide all or part of a state of movement analysis of device 102 using data from any application 520 operating on device 102, such as an email application, SMS text application, Instant Messaging application and a telephone application. Override (hardware/software) data and switch settings may also be used to determine the status of device 102. Module 520F may provide status messages to server 106c or other external devices, based on received requests or changes in movement status. Module 520F may impose thresholds on the movement data before sending such status messages. Module 520F may generate and send communications to external devices (such as interface server 108 or server 106c) regarding this data on a periodic basis, on a per-request basis, or as the device's movement changes. Advertisement processing module 520G receives and extracts any components of advertisements provided to device 102 and provides the components to the proper output devices (e.g. display 402, speaker 404). It also has a conversion module to convert one form of an input file (e.g. text file) to another output format (e.g. audio) to facilitate converting a format of a received advertisement from one media to another. If a component of an advertisement is provided as an email, then data communication module 520B will process same. As well, additional software modules, such as software module 520N, which may be for instance a personal information manager (PIM) application, may be installed during manufacture or downloaded thereafter into device 102. Data associated with each application can be stored in flash memory 514.

Data communication module 520B may comprise processes that implement features, processes and applications for device 102 as provided and described earlier, allowing device 102 to generate track status of various components of device 102 and to generate and send messages to external devices (such as interface server 108).

Communication functions, including data and voice communications, are performed through the communication sub-system 504 and the short-range communication sub-system 506. Collectively, sub-systems 504 and 506 provide the signal-level interface for all communication technologies processed by device 102. Various applications 520 provide the operational controls to further process and log the communications. Communication sub-system 504 includes receiver 522, transmitter 524 and one or more antennas, illustrated as receive antenna 526 and transmit antenna 528. In addition, communication sub-system 504 also includes processing modules, such as digital signal processor (DSP) 530 and local oscillators (LOs) 532. The specific design and implementation of communication sub-system 504 is dependent upon the communication network in which device 102 is intended to operate. For example, communication sub-system 504 of device 102 may operate with the Mobitex (trade-mark), DataTAC (trade-mark) or General Packet Radio Service (GPRS) mobile data communication networks and also operate with any of a variety of voice communication networks, such as Advanced Mobile Phone Service (AMPS), Time Division Multiple Access (TDMA), Code Division Multiple Access (CDMA), CDMA 2000, Personal Communication Service (PCS), Global System for Mobile Communication (GSM), etc. Other types of data and voice (telephonic) networks, both separate and integrated, may also be utilized with device 102. In any event, communication sub-system 504 provides device 102 with the capability of communicating with other devices using various communication technologies, including instant messaging (IM) systems, text messaging (TM) systems and short message service (SMS) systems.

In addition to processing communication signals, DSP 530 provides control of receiver 522 and transmitter 524. For example, gains applied to communication signals in receiver 522 and transmitter 524 may be adaptively controlled through automatic gain-control algorithms implemented in DSP 530.

Short-range communication sub-system 506 enables communication between device 102 and other proximate systems or devices, which need not necessarily be similar devices. For example, the short-range communication sub-system may include an infrared device and associated circuits and components, or a Bluetooth (trade-mark) communication module to provide for communication with similarly enabled systems. Sub-system 506 may be able to communicate with a communication system of a vehicle.

Powering the entire electronics of the mobile handheld communication device is power source 534. In one embodiment, the power source 534 includes one or more batteries. In another embodiment, the power source 534 is a single battery pack, especially a rechargeable battery pack. A power switch (not shown) provides an "on/off" switch for device 102. A power source interface (not shown) may be provided in hardware, firmware, software or a combination of such elements to selectively control access of components in device 102 to power source 534. Upon activation of the power switch an application 520 is initiated to turn on device 102. Upon deactivation of the power switch, an application 520 is initiated to turn off device 102. Power to device 102 may also be controlled by other devices and by software applications 520. Other components in device 102 include light sensor 542. RFID module 544 may include an RFID transponder and / or an RFID reader.

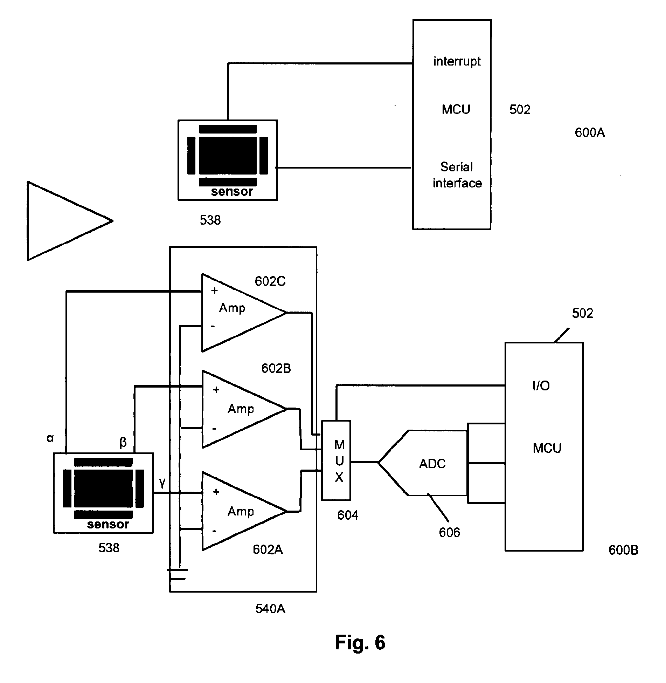

Referring to Fig. 6, with some algorithms of an embodiment described, further detail is provided on how aspects of the embodiment are implemented in device 102 through movement detection circuit 536 and its related components. Therein, two sensors arrangements for device 102 are shown. Circuit 600A shows sensor 538 directly connected to the interrupt and serial interface input lines of microprocessor 502. Accordingly, software operating on microprocessor 502 is provided to selectively monitor signal(s) from sensor 538 to determine when movement of device 102 has been detected. The circuit between sensor 538 and microprocessor 502 can be considered to be one version of circuit 536. Software operating on microprocessor 502 determines when a notable signal has been generated by sensor 238. Circuit 600B shows sensor 538 connected to trigger circuit 540A having two differential comparators 602A and 602B, which then have their outputs attached to an analog mux 604. The mux selectively provides its output according to a control signal generated by microprocessor 502. The analog output of mux 604 is converted to a set of digital signals by analog to digital converter 606, which then provides the output to microprocessor 502. As with other implementation, software operating on microprocessor 502 determines when a notable signal has been generated by sensor 538. Reading of positions determined by the software can be stored in memory 514 or 516. The software can also create an average reading of the movement readings. This average reading can be used to determine when device 102 is in a resting position or when it is effectively in a resting position (e.g. it is being moved only in inconsequential amounts).

For any embodiment, a low-g MEMS (micro-electromechanical system) accelerometer may be used for motion sensor 538. Further, the accelerometer may be of almost any type, including a capacitive, piezoelectric, piezoresistive, or a gas-based accelerometer. An exemplary low-g MEM accelerometer is a LIS302DL tri-axis digital accelerometer, available from STMicroelectronics of Geneva, Switzerland. Accelerometers sense and convert an acceleration detected from a motion (e.g. tilt, inertial, or vibration) or gravity into an electrical signal (producing a corresponding change in output) and are available in one, two or three axis configurations. Accelerometers may produce digital or analog output signals.

Since an accelerometer detects a change in velocity, in order to use an accelerometer to detect a certain speed, signals from an accelerometer may be used to detect velocity changes, which are then analyzed to determine whether an underlying given (average) speed is associated with the changes. In a moving vehicle, for example, as the device is moving, different accelerations may be detected as the vehicle speeds up (perhaps from a stop), slows down (perhaps to a stop) and turns corners during the driving. These velocity changes can be mapped against predetermined speed levels which then can be used to select given formats of advertisements, for example as provided in Table A.

To improve sensitivities of an accelerometer when it is used as motion sensor 538, its outputs can be calibrated to compensate for individual axis offset and sensitivity variations. Calibrations can also be performed at the system level, providing end-to-end calibration. Calibrations can also be performed by collecting a large set of measurements with the device in different orientations.

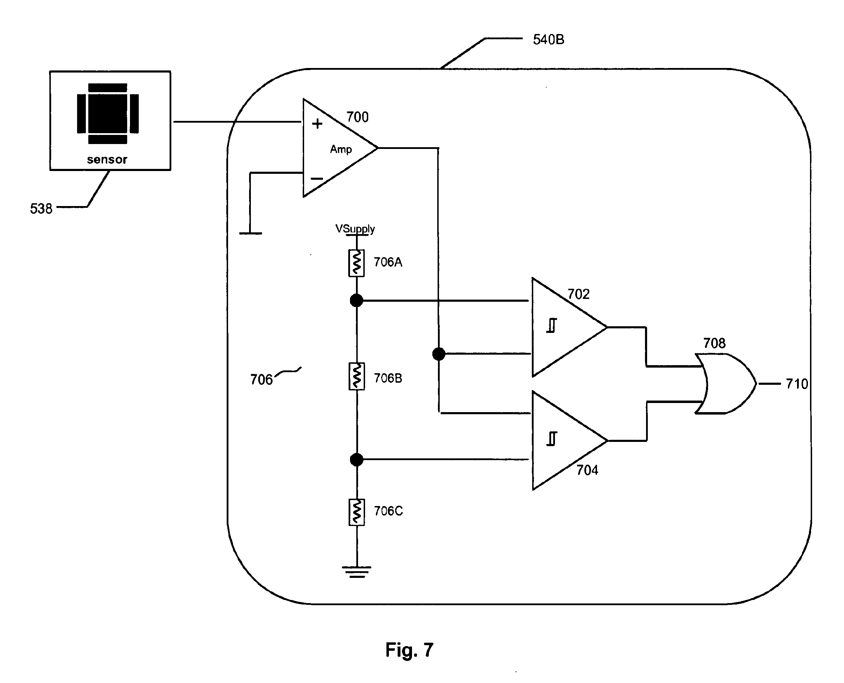

Referring to Fig. 7, an alternative circuit 540B is shown for sensor 538 which is aligned as a single axis analog sensor. Sensor 538 can be oriented such that its output detects movement along a desired axis (e.g. 'Z' axis detecting when device moved vertically). Additional axes may be monitored by replicating circuit 540B for each additional axis. Briefly, the output of sensor 538 is provided to buffer amp 700. The output of buffer amp 700 is provided in tandem to comparators 702 and 704. The other inputs of comparators 702 and 704 are taken from different taps on resistor ladder 706, comprising resistors 706A, 706B and 706C. Comparators 702 and 704 each produce upper and lower limit comparison signals for the output of sensor 538. If the value of the signal from sensor 538 is either above the upper limit set by the parameters of comparator 702 (comparing the signal from sensor 538 against its tap from the resistor ladder 706) or below the lower limit set by the parameters of comparator 704 (comparing the signal from sensor 538 against its tap from the resistor ladder 706) then OR gate 708 generates a trigger signal 710. It will be appreciated that the limits can be used to define a range of signals detected by sensor 538 representing when be device 102 is either stationary (e.g. at rest) or being moved.

It will be appreciated that other circuits using different combinations of sensors and triggering components and threshold detectors may be used to provide functionalities of sensor 538 and circuit 540.

In other embodiments, motion sensor 538 may be substituted or combined with a different device, such as a spring-loaded switch, a tilt switch, a gyroscope, a mercury switch, GPS module 546 or any other device which can generate a signal responsive to movement or change in orientation of device 102. It is preferable that the device have low quiescent power draw characteristics.

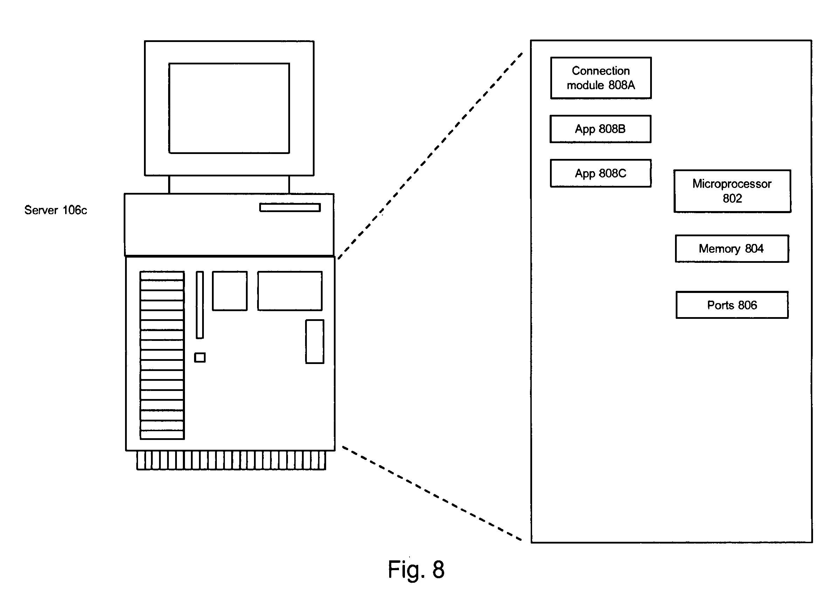

Now, further detail is provided on features of server 106c. Referring to Fig. 8, general features of server 106c for processing electronic communications in accordance with an embodiment are shown. In an embodiment, server 106c is based on a general purpose computing platform. It may have the form factor of a desktop or laptop computer. It may be a minicomputer. In a present embodiment, computer 106c includes main processing station 800. Internally, server 106c has microprocessor 802 and memory 804. Connection ports 806 provides one communication connection system to allow server 106c to connect to with network 104, providing access to device 102 and other devices. Applications 808 are software that execute on microprocessor 802 and may be stored in memory 804 as database 122. Advertisements for advertising campaigns and their associated attribute data may be stored in database 122.

Applications 808 control basic operations of computer 116, including ports 806. Connection module 808A provides the connection-level communication between server 106c and other elements in network 104, such as interface server 108 to ultimately allow access to processing of emails, IMs, data and other data transmission through server 108. Movement analysis module 808B initiates requests for movement data to device 102, receives movement data from device 102 and analyzes the movement data to determine a state of movement for device 102. Advertisement selection module 808C selects and sends an advertisement to device 102 based on trigger conditions (per Table A) and movement results provided by module 808B. Module 808C may also have a conversion module to convert one form of an input file (e.g. text file) to another output format (e.g. audio) to facilitate converting a format of a sent advertisement from one media to another. Additionally, advertisements may be sent to device 102 depending on other scheduling and trigger conditions. Module 808B may initiate a command destined for another application server 106 (such as email server 106d or voice mail server 106b) to send a message containing a provided advertisement to device 102. As such, applications 808A-C execute processes for server 106c as described in Fig. 3.

In another embodiment, devices in a network may periodically send movement data to advertisement server 106c. Server 106c may use that data as criteria to select appropriate advertisements.

The embodiments have been described for a system that provides an interface server to provide intermediary processing of communications between a device and servers in a network. It will be appreciated that embodiments may implement the features in any communication protocol or system. It will be appreciated that any features of interface server as described herein may be incorporated into a device or a component of another server in network 104.

It will be appreciated that the embodiments relating to devices, servers and systems may be implemented in a combination of electronic hardware, firmware and software. The firmware and software may be implemented as a series of processes, applications and/or modules that provide the functionalities described herein. The algorithms and processes described herein may be executed in different order(s). Interrupt routines may be used. Data may be stored in volatile and non-volatile devices described herein and may be updated by the hardware, firmware and/or software. Other network embodiments may use non-client server architectures for management of communications.

It will be appreciated that a system and method in accordance with an embodiment can address a technical problem of how to provide common data items to a plurality of mobile telecommunication devices within a mobile telecommunication network through a push or pull mechanism. By selecting individual sets of two or more devices from the plurality of available devices operating within the network based on shared attributes between two or more communicating devices, an embodiment may enable the specific distribution of appropriate data items to those selected devices. This selective targeting of the devices and / or content may provide a reduction in the overall traffic within the network as it can obviate or reduce the need to push (or pull) data items to all devices operating in the network, rather data items are distributed to those devices whose attributes match a predefined attribute type. Furthermore, the matching of the nature of the data items that is sent to the attributes may further provide reduction in traffic within the network as the data items that are pushed (or pulled) are pre-filtered prior to their distribution to targeted mobile devices.

As used herein, the wording "and / or" is intended to represent an inclusive-or. That is, "X and / or Y" is intended to mean X or Y or both.

In this disclosure, where a threshold or measured value is provided as an approximate value (for example, when the threshold is qualified with the word "about"), a range of values will be understood to be valid for that value. For example, for a threshold stated as an approximate value, a range of about 25% larger and 25% smaller than the stated value may be used. Thresholds, values, measurements and dimensions of features are illustrative of embodiments and are not limiting unless noted. Further, as an example, a "sufficient" match with a given threshold may be a value that is within the provided threshold, having regard to the approximate value applicable to the threshold and the understood range of values (over and under) that may be applied for that threshold.

The present disclosure is defined by the claims appended hereto, with the foregoing description being merely illustrative of embodiments of the present disclosure. Those of ordinary skill may envisage certain modifications to the foregoing embodiments which, although not explicitly discussed herein, do not depart from the scope of the present disclosure, as defined by the appended claims.

## Claims

1. A method for distributing advertisements to a portable electronic device (102), said method comprising:
receiving movement data and context data from said device (102);
determining from the received movement data a state of movement of said device;
determining from the received context data whether said device (102) is associated with a driver of a vehicle or with a passenger associated with said driver;
selecting an advertisement from a set of advertisements based on the state of movement and the received context data,
if the context data indicated that said device is associated with a driver of a vehicle then said advertisement includes an audio component;
if the context data indicates that said device (102) is associated with a passenger associated with said driver then said advertisement differs from another advertisement in said set of advertisements sent to a second device associated with said driver; and
transmitting said advertisement to said device (310).

2. The method for distributing advertisements to a portable electronic device (102) as claimed in claim 1, further comprising:
identifying a second advertisement from said set of advertisements for said second device based on a state of movement and context data associated with said second device; and
transmitting said second advertisement to said second device.

3. The method for distributing advertisements to a portable electronic device (102) as claimed in claim 1 or 2, wherein said state of movement is determined from comparing said movement data against a threshold to determine a speed of said device (102).

4. The method for distributing advertisements to a portable electronic device (102) as claimed in claim 3, wherein:
if said speed exceeds said threshold then said advertisement includes an audio component; and
if said speed does not exceed said threshold then said advertisement provides audio and visual components.

5. The method for distributing advertisements to a portable electronic device (102) as claimed in any preceding claim, wherein said context data comprises at least any one of data from a calendar module operating on said device, or time data associated with said device (102).

6. The method for distributing advertisements to a portable electronic device (102) as claimed in any preceding claim, further comprising:
if said state of movement changes to a second state of movement, selecting a replacement advertisement from said set of advertisements based on said second state of movement; and
transmitting said replacement advertisement to said device (102).

7. The method for distributing advertisements to a portable electronic device (102) as claimed in any preceding claim, wherein:
said advertisement is selected based on a route of travel for said device derived from said movement data.

8. The method for distributing advertisements to a portable electronic device (102) as claimed in any preceding claim, further comprising:
providing a request application interactive associated with said advertisement to have said device initiate a request for additional information relating to said advertisement to be provided to said device (102).

9. The method for distributing messages to a portable electronic device (102) as claimed in any preceding claim, wherein after transmitting said advertisement to said device (102), said advertisement is generated on a display on said device (102).

10. The method for distributing advertisements to a portable electronic device (102) as claimed in any preceding claim, wherein:
said movement data is provided from one or more of an accelerometer (538), global positioning system (GPS) data, and communication strength signals, provided from said device (102).

11. The method for distributing advertisements to a portable electronic device (102) as claimed in claim 10, wherein:
if said movement data is provided from said accelerometer, data from said accelerometer is analyzed to determine said speed based on data relating to changes of speed detected by said accelerometer (538) for said device (102).

12. The method for distributing messages to electronic devices (102) as claimed in any one of claims 1 to 11, wherein identifying said set of devices utilizes peer identification information from said given device, wherein optionally, said peer identification information is provided from radio frequency identification (RFID) or data from a Bluetooth connection for said given device.

13. A server (106c) for distributing messages to a portable electronic device (102), said server comprising:
a movement analysis module (808B) to receive movement data and context data from said portable electronic device (102), analyze the movement data to determine a state of movement of said device (102) and analyze the context data to determine whether said device (102) is associated with a driver of a vehicle or with a passenger associated with said driver;
an advertisement selection module (808C) for selecting an advertisement from a set of advertisements based on said state of movement and the received context data; and
an advertisement transmittal module for transmitting said advertisement to said device (102), said advertisement for generation on a display of said device (102),
wherein said server is configured to carry out the method steps of any one of claims 1 to 12.

## Patentansprüche

1. Ein Verfahren zum Verteilen von Werbeanzeigen an eine tragbare elektronische Vorrichtung (102), wobei das Verfahren aufweist:
Empfangen von Bewegungsdaten und Kontextdaten von der Vorrichtung (102);
Bestimmen aus den empfangenen Bewegungsdaten eines Bewegungszustands der Vorrichtung;
Bestimmen aus den empfangenen Kontextdaten, ob die Vorrichtung (102) mit einem Fahrer eines Fahrzeugs oder mit einem zu dem Fahrer gehörenden Passagier assoziiert ist;
Auswählen einer Werbeanzeige aus einem Satz von Werbeanzeigen basierend auf dem Bewegungszustand und den empfangenen Kontextdaten, wenn die Kontextdaten angeben, dass die Vorrichtung mit einem Fahrer eines Fahrzeugs assoziiert ist, dann umfasst die Werbeanzeige eine Audio-Komponente,
wenn die Kontextdaten angeben, dass die Vorrichtung (102) mit einem zu dem Fahrer gehörenden Passagier assoziiert ist, dann unterscheidet sich die Werbeanzeige von einer anderen Werbeanzeige in dem Satz von Werbeanzeigen, die an eine zweite Vorrichtung gesendet wird, die mit dem Fahrer assoziiert ist; und
Übertragen der Werbeanzeige an die Vorrichtung (310).

2. Das Verfahren zum Verteilen von Werbeanzeigen an eine tragbare elektronische Vorrichtung (102) gemäß Anspruch 1, das weiter aufweist:
Identifizieren einer zweiten Werbeanzeige aus dem Satz von Werbeanzeigen für die zweite Vorrichtung basierend auf einem Bewegungszustand und Kontextdaten, die mit der zweiten Vorrichtung assoziiert sind; und
Übertragen der zweiten Werbeanzeige an die zweite Vorrichtung.

3. Das Verfahren zum Verteilen von Werbeanzeigen an eine tragbare elektronische Vorrichtung (102) gemäß Anspruch 1 oder 2, wobei der Bewegungszustand bestimmt wird aus einem Vergleichen der Bewegungsdaten mit einer Schwelle, um eine Geschwindigkeit der Vorrichtung (102) zu bestimmen.

4. Das Verfahren zum Verteilen von Werbeanzeigen an eine tragbare elektronische Vorrichtung (102) gemäß Anspruch 3, wobei:
wenn die Geschwindigkeit die Schwelle übersteigt, dann umfasst die Werbeanzeige eine Audio-Komponente; und
wenn die Geschwindigkeit die Schwelle nicht übersteigt, dann sieht die Werbeanzeige Audio- und visuelle Komponenten vor.

5. Das Verfahren zum Verteilen von Werbeanzeigen an eine tragbare elektronische Vorrichtung (102) gemäß einem vorhergehenden Anspruch, wobei die Kontextdaten zumindest eines aufweisen aus Daten aus einem Kalendermodul, das auf der Vorrichtung arbeitet, oder Zeitdaten, die mit der Vorrichtung (102) assoziiert sind.

6. Das Verfahren zum Verteilen von Werbeanzeigen an eine tragbare elektronische Vorrichtung (102) gemäß einem vorhergehenden Anspruch, das weiter aufweist:
wenn sich der Bewegungszustand in einen zweiten Bewegungszustand ändert, Auswählen einer Ersatz-Werbeanzeige aus dem Satz von Werbeanzeigen basierend auf dem zweiten Bewegungszustand; und Übertragen der Ersatz-Werbeanzeige an die Vorrichtung (102).

7. Das Verfahren zum Verteilen von Werbeanzeigen an eine tragbare elektronische Vorrichtung (102) gemäß einem vorhergehenden Anspruch, wobei:
die Werbeanzeige basierend auf einer Reiseroute für die Vorrichtung abgeleitet aus den Bewegungsdaten ausgewählt wird.

8. Das Verfahren zum Verteilen von Werbeanzeigen an eine tragbare elektronische Vorrichtung (102) gemäß einem vorhergehenden Anspruch, das weiter aufweist:
Vorsehen einer Anforderungs-Anwendung, die interaktiv mit der Werbeanzeige assoziiert ist, damit die Vorrichtung eine Anforderung für zusätzliche Information in Bezug auf die Werbeanzeige initiiert, die an die Vorrichtung (102) zu liefern ist.

9. Das Verfahren zum Verteilen von Werbeanzeigen an eine tragbare elektronische Vorrichtung (102) gemäß einem vorhergehenden Anspruch, wobei nach dem Übertragen der Werbeanzeige an die Vorrichtung (102) die Werbeanzeige auf einer Anzeige der Vorrichtung (102) erzeugt wird.

10. Das Verfahren zum Verteilen von Werbeanzeigen an eine tragbare elektronische Vorrichtung (102) gemäß einem vorhergehenden Anspruch, wobei:
die Bewegungsdaten von einem oder mehreren aus einem Beschleunigungsmesser (538), GPS(global positioning system)-Daten und Kommunikationsstärkesignalen vorgesehen werden, die von der Vorrichtung (102) geliefert werden.

11. Das Verfahren zum Verteilen von Werbeanzeigen an eine tragbare elektronische Vorrichtung (102) gemäß Anspruch 10, wobei:
wenn die Bewegungsdaten von dem Beschleunigungsmesser vorgesehen werden, werden Daten von dem Beschleunigungsmesser analysiert, um die Geschwindigkeit zu bestimmen basierend auf Daten in Bezug auf Geschwindigkeitsänderungen, die von dem Beschleunigungsmesser (538) für die Vorrichtung (102) erfasst werden.

12. Das Verfahren zum Verteilen von Werbeanzeigen an elektronische Vorrichtungen (102) gemäß einem der Ansprüche 1 bis 11, wobei das Identifizieren des Satzes von Vorrichtungen eine Peer-Identifikationsinformation von der gegebenen Vorrichtung verwendet, wobei optional die Peer-Identifikationsinformation von RFID (radio frequency identification) oder Daten aus einer Bluetooth-Verbindung für die gegebene Vorrichtung vorgesehen wird.

13. Ein Server (106c) zum Verteilen von Nachrichten an eine tragbare elektronische Vorrichtung (102), wobei der Server aufweist:
ein Bewegungsanalysemodul (808B) zum Empfangen von Bewegungsdaten und Kontextdaten von der tragbaren elektronischen Vorrichtung (102), Analysieren der Bewegungsdaten, um einen Bewegungszustand der Vorrichtung (102) zu bestimmen, und Analysieren der Kontextdaten, um zu bestimmen, ob die Vorrichtung (102) mit einem Fahrer eines Fahrzeugs oder mit einem zu dem Fahrer gehörenden Passagier assoziiert ist;
ein Werbeanzeigeauswahlmodul (808C) zum Auswählen einer Werbeanzeige aus einem Satz von Werbeanzeigen basierend auf dem Bewegungszustand und den empfangenen Kontextdaten; und
ein Werbeanzeigeübertragungsmodul zum Übertragen der Werbeanzeige an die Vorrichtung (102), wobei die Werbeanzeige zur Erzeugung auf einer Anzeige der Vorrichtung (102) vorgesehen ist,
wobei der Server konfiguriert ist zum Ausführen der Verfahrensschritte gemäß einem der Ansprüche 1 bis 12.

## Revendications

1. Procédé permettant de distribuer des publicités à un dispositif électronique portable (102), ledit procédé comprenant le fait :
de recevoir des données de mouvement et des données de contexte à partir dudit dispositif (102) ;
de déterminer, à partir des données de mouvement reçues, un état de mouvement dudit dispositif ;
de déterminer, à partir des données de contexte reçues, si ledit dispositif (102) est associé à un conducteur d'un véhicule ou à un passager associé audit conducteur ;
de sélectionner une publicité parmi un ensemble de publicités sur la base de l'état de mouvement et des données de contexte reçues,
si les données de contexte indiquent que ledit dispositif est associé à un conducteur d'un véhicule alors ladite publicité comporte une composante audio ;
si les données de contexte indiquent que ledit dispositif (102) est associé à un passager associé audit conducteur alors ladite publicité diffère d'une autre publicité dans ledit ensemble de publicités envoyée à un deuxième dispositif associé audit conducteur ; et
de transmettre ladite publicité audit dispositif (310).

2. Procédé permettant de distribuer des publicités à un dispositif électronique portable (102) tel que revendiqué dans la revendication 1, comprenant en outre le fait :
d'identifier une deuxième publicité parmi ledit ensemble de publicités pour ledit deuxième dispositif sur la base d'un état de mouvement et des données de contexte associées audit deuxième dispositif ; et
de transmettre ladite deuxième publicité audit deuxième dispositif.

3. Procédé permettant de distribuer des publicités à un dispositif électronique portable (102) tel que revendiqué dans la revendication 1 ou 2, dans lequel ledit état de mouvement est déterminé à partir de la comparaison desdites données de mouvement par rapport à un seuil pour déterminer une vitesse dudit dispositif (102).

4. Procédé permettant de distribuer des publicités à un dispositif électronique portable (102) tel que revendiqué dans la revendication 3, dans lequel :
si ladite vitesse dépasse ledit seuil alors ladite publicité comporte une composante audio ; et
si ladite vitesse ne dépasse pas ledit seuil alors ladite publicité fournit des composantes audio et visuelle.

5. Procédé permettant de distribuer des publicités à un dispositif électronique portable (102) tel que revendiqué dans l'une des revendications précédentes, dans lequel lesdites données de contexte comprennent au moins une donnée quelconque parmi des données provenant d'un module de calendrier fonctionnant sur ledit dispositif, ou des données de temps associées audit dispositif (102).

6. Procédé permettant de distribuer des publicités à un dispositif électronique portable (102) tel que revendiqué dans l'une des revendications précédentes, comprenant en outre le fait :
de sélectionner, si ledit état de mouvement passe à un deuxième état de mouvement, une publicité de remplacement parmi ledit ensemble de publicités sur la base dudit deuxième état de mouvement ; et
de transmettre ladite publicité de remplacement audit dispositif (102).

7. Procédé permettant de distribuer des publicités à un dispositif électronique portable (102) tel que revendiqué dans l'une des revendications précédentes, dans lequel :
ladite publicité est sélectionnée sur la base d'un itinéraire de déplacement pour ledit dispositif dérivé desdites données de mouvement.

8. Procédé permettant de distribuer des publicités à un dispositif électronique portable (102) tel que revendiqué dans l'une des revendications précédentes, comprenant en outre le fait :
de fournir une application de demande interactive associée à ladite publicité pour amener ledit dispositif à lancer une demande pour des informations supplémentaires relatives à ladite publicité à fournir audit dispositif (102).

9. Procédé permettant de distribuer des messages à un dispositif électronique portable (102) tel que revendiqué dans l'une des revendications précédentes, dans lequel, après la transmission de ladite publicité audit dispositif (102), ladite publicité est générée sur un écran sur ledit dispositif (102).

10. Procédé permettant de distribuer des publicités à un dispositif électronique portable (102) tel que revendiqué dans l'une des revendications précédentes, dans lequel :
lesdites données de mouvement sont fournies par un ou plusieurs éléments parmi un accéléromètre (538), des données de système de localisation (GPS), et des signaux d'intensité de communication, fournis par ledit dispositif (102).

11. Procédé permettant de distribuer des publicités à un dispositif électronique portable (102) tel que revendiqué dans la revendication 10, dans lequel :
si lesdites données de mouvement sont fournies par ledit accéléromètre, des données provenant dudit accéléromètre sont analysées pour déterminer ladite vitesse sur la base de données relatives à des changements de vitesse détectés par ledit accéléromètre (538) pour ledit dispositif (102).

12. Procédé permettant de distribuer des messages à des dispositifs électroniques (102) tel que revendiqué dans l'une quelconque des revendications 1 à 11, dans lequel l'identification dudit ensemble de dispositifs utilise des informations d'identification homologue à partir dudit dispositif donné, où éventuellement, lesdites informations d'identification homologue sont fournies par identification par radiofréquence (RFID) ou des données par une connexion Bluetooth pour ledit dispositif donné.

13. Serveur (106c) permettant de distribuer des messages à un dispositif électronique portable (102), ledit serveur comprenant :
un module d'analyse de mouvement (808B) pour recevoir des données de mouvement et des données de contexte à partir dudit dispositif électronique portable (102), pour analyser les données de mouvement afin de déterminer un état de mouvement dudit dispositif (102) et pour analyser les données de contexte afin de déterminer si ledit dispositif (102) est associé à un conducteur d'un véhicule ou à un passager associé audit conducteur ;
un module de sélection de publicité (808C) pour sélectionner une publicité parmi un ensemble de publicités sur la base dudit état de mouvement et des données de contexte reçues ; et
un module de transmission de publicité pour transmettre ladite publicité audit dispositif (102), ladite publicité pour la génération sur un écran dudit dispositif (102),
où ledit serveur est configuré pour exécuter les étapes de procédé de l'une quelconque des revendications 1 à 12.
